Europäisches Patentamt

European Patent Office

Office européen des brevets

(11) Publication number: **0 055 922**
**B1**

(12) **EUROPEAN PATENT SPECIFICATION**

(45) Date of publication of patent specification: **26.09.84**

(51) Int. Cl.³: **H 04 L 27/00**

(21) Application number: **81306112.4**

(22) Date of filing: **23.12.81**

(54) Adaptive equalizer for quadrature amplitude modulation.

(30) Priority: **26.12.80 JP 185609/80**

(43) Date of publication of application:
**14.07.82 Bulletin 82/28**

(45) Publication of the grant of the patent:
**26.09.84 Bulletin 84/39**

(84) Designated Contracting States:
**FR GB IT**

(56) References cited:
**DE-A-2 020 805**
**DE-A-2 319 807**
**US-A-3 727 136**

(73) Proprietor: **NEC CORPORATION**
**33-1, Shiba 5-chome, Minato-ku**
**Tokyo 108 (JP)**

(72) Inventor: **Ryu, Toshihiko**
**c/o Nippon Electric Co. Ltd. 33-1 Shiba Gochome**
**Minato-ku Tokyo 108 (JP)**

(74) Representative: **Orchard, Oliver John**
**JOHN ORCHARD & CO. Staple Inn Buildings**
**North High Holborn**
**London WC1V 7PZ (GB)**

Courier Press, Leamington Spa, England.

## Description

The present invention relates to an adaptive equalizer and, more particularly, to an adaptive equalizer for quadrature amplitude-modulated (QAM) waves for use in a digital radio transmission system.

Whereas a digital radio transmission system is susceptible to channel deterioration or momentary disconnection due to waveform distortion by multipath fading or the like occurring on the transmission path, these troubles are known to be surmountable by the use of an adaptive equalizer (hereinafter called equalizer) such as a transversal equalizer or a decision-feedback type equalizer.

Requirements on an equalizer include firstly, the ease of initial level setting and, secondly, a simple structure.

The first requirement stems from the need, when the tap coefficient control loop (hereinafter called control loop) becomes a synchronized, to set the quantity of variable tap coefficient control at its initial level and thereby to achieve readjustment. This action is commonly known as resetting. The resetting function makes it possible to improve the synchronizing performance of the equalizer and maintain a stable synchronous state. A known method to realize this resetting function is to provide a voltage generator for setting the initial level and to set the aforementioned quantity of variable tap coefficient control at its initial level by supplying the output of this voltage generator to the variable tap gain circuit of each tap in response to a signal of frame asynchronization or the like. For details on this method, reference is made to the Japanese Patent Application Disclosure No. 49—2416 (or the corresponding West German Patent DE—A—2319807), which discloses an adaptive equalizer as defined in the preamble of claim 1. This method of prior art, however, involves the disadvantage of requiring, apart from the equalizer, the power voltage generator for setting initial level and a relay for switching connections.

The second point, relative complexity or simplicity of structure, largely depends on the equalizing algorithm for the equalizer, and the arrangement of the transversal filter section of the equalizer in the intermediate frequency (IF) band or in the baseband.

Equalizing algorithms involving no complicated circuitry, conventionally used for the equalizer, include the zero forcing (ZF) method and the modified zero forcing (MZF) method. Both the methods employing digital signal processing techniques, can be readily realized by using such simple circuits as logic circuits or shift registers. For details on these techniques, reference is made to D. Hirsch, "A Simple Adaptive Equalizer for Efficient Data Transmission", IEEE TRANSACTIONS ON COMMUNICATION TECHNOLOGY, Vol. COM-18, No. 1, pp. 5—12, February 1970.

As regards where the transversal filter section is disposed meanwhile, since the input signals are quadrature amplitude-modulated waves, a transversal filter arranged in the IF band has the advantage that an orthogonal or quadrature component, as a modulated wave, is contained in a single signal and therefore no more than $2N_1$ variable attenuator circuits for providing variable tap coefficients are needed, the number of taps being represented by $N_1$ (a positive integer). A transversal filter in the baseband, on the other hand, involves the disadvantage that it requires from $2N_2$ to $4N_2$ variable attenuator circuits for processing the orthogonal component of the input signal, $N_2$ (a positive integer) representing the number of taps, involves an accordingly complicated circuitry and therefore is troublesome to adjust.

The more simply structured transversal filter in the IF band, only when the input carrier frequency is equal to an integral multiple of the modulation rate, readily admits an algorithm by the ZF method since the number of phase rotations against the carrier wave in the signal delay circuit, which is selected to be equal to the inverse number of the modulation rate, is then equal to an integral multiple of $2\pi$ and so are phase differences between the taps. However, when the input carrier frequency is unequal to any integral multiple of the modulation rate, phase differences between the taps are unequal and accordingly the filter as it is does not permit the use of the ZF method.

An object of the present invention therefore is to provide a adaptive equalizer for QAM waves which is highly stable and yet simple inhstructure.

This object is achieved by providing the adaptive equalizer defined in the preamble of claim 1 with the features contained in the characterising portion.

Features of the equalizer according to the invention are as follows:

(1) The initial level setting means is much simpler in structure since the control signal generating circuit includes a self-feedback control loop, as described hereinafter;

(2) In an equalizer selecting the delay time of the signal delay circuit of the IF band transversal filter to be equal to the inverse number of either the modulation rate as it is or double the modulation rate, the ZF method can be used by selecting the signal polarity in the control loop, which controls the variable tap gain circuit for each tap, according to the phase difference of the carrier between taps and, in the event of a frequency offset of the carrier, the quantity of phase shift; and

(3) Instead of resorting to the known method of selecting the delay time of the signal delay circuit of the IF band transversal filter to be equal to the inverse number of the modulation rate of QAM waves, it enables the IF band transversal filter, even if a frequency offset occurs to the carrier wave, to achieve control by the ZF method by selecting said delay time to be as close as practicable to the inverse number of the modulation rate under a condition where the carrier waves at taps take on a specific phase relationship.

Other features and advantages of the present invention will be more apparent from the detailed description hereunder taken in conjunction with the accompanying drawings, wherein:

Fig. 1 illustrates an embodiment of a three-tapped equalizer according to the invention, having an IF band transversal filter using the ZF method;

Fig. 2 shows one embodiment of the integrator with resetting function as referred to in Fig. 1;

Fig. 3 depicts one embodiment of the decision/error signal generator circuit, where the number of signal vectors L equals 16, as referred to in Fig. 1;

Fig. 4, 5(a) and 5(b) are diagrams of the demodulated signal waveform and threshold levels for explaining the error signal generating method of prior art when L equals 16, and

Fig. 6 is a vector diagram of IF signals.

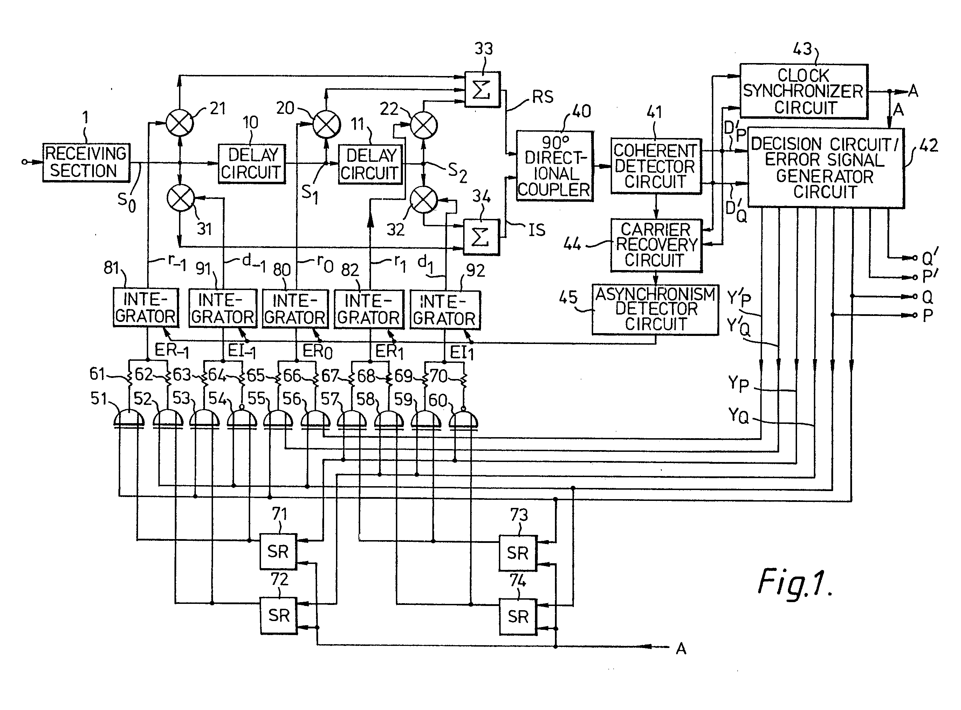

The embodiment of the invention illustrated in Fig. 1 is a three-tapped equalizer with an IF band transversal filter, having 16 QAM waves as its input. The description hereunder generally applies, as it refers to any value of $L (L=l^2$, l being an integer not smaller than 2) and to an N-tapped (N being a positive integer) equalizer with an IF band transversal filter.

A radio signal is picked by an antenna (not shown) and fed to a receiving section 1.

The IF signal $S_0$ from the receiving section 1 is delayed by a delay circuit 10 to provide a signal $S_1$, and further delayed by a delay circuit 11 to provide a signal $S_2$. The signal $S_0$ is branched, and multiplied in variable tap gain circuits 21 and 31 respectively by control signals $\gamma_{-1}$ and $d_{-1}$ from integrator circuits with resetting functions 81 and 91. The signal $S_2$ is also branched, and multiplied in variable tap gain circuits 22 and 32 respectively by control signals $\gamma_1$ and $d_1$ from integrator circuits with resetting function 82 and 92. Meanwhile the signal $S_1$, too, is multiplied in a variable tap gain circuit 20 by a control signal $\gamma_0$ from an integrator circuit with resetting function 80. The output signals of the variable tap gain circuits 20, 21 and 22 are summed by a signal summing circuit 33 into a signal RS. On the other hand the output signals of the variable tap gain circuits 31 and 32 are synthesized by a signal summing circuit 34 into a signal IS. The signals RS and IS are so combined by a 90°-directional coupler 40 that their phases are at a 90° angle to each other and fed to a coherent detector circuit 41, which receives a recovered carrier from a carrier recovery circuit 44, detects the input modulated carrier wave thereby to generate two trains of baseband signals $D_P'$ and $D_Q'$. Whereas many methods for carrier recovery are known including the baseband processing technique such as the one disclosed in the U.S. Patent No. 3,983,499, the present invention can obviously use any such or other method.

An asynchronism detector circuit 45, as referred to in Fig. 1, uses a circuit for detecting out-of-locking of the carrier recovery loop (see, for instance, the Japanese Patent Publication No. 55—34619 or the U.S. Patent No. 4,121,166), and another conceivable method of asynchronism detection is monitoring the bit error rate and, when the bit error rate surpasses a prescribed level, imposing the initial level resetting, as in U.S. Patent 3,721,959.

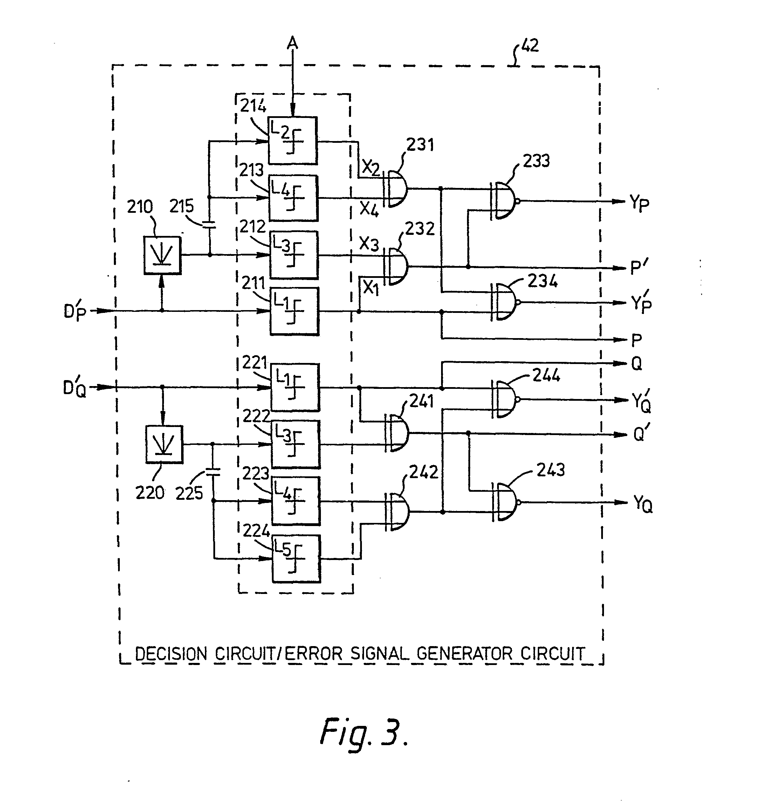

The decision/error signal generator circuit 42 (to be further described in detail with reference to Fig. 3) monitors two trains of demodulated (quadrinary) baseband signals $D_P'$ and $D_Q'$ and, by detecting any deviation from 4 levels which are preset in the absence of distortion, supplies error signals $Y_P'$ and $Y_Q'$ for the control of the main tap and error signals $Y_P$ and $Y_Q$ for the control of other taps, corresponding to different distortions. The ZF algorithm corrects each of tap coefficients $C_{jk}$ by the use of these error signals in accordance with the steepest descent method to minimize the cusp or peak levels of waveform distortions, and the following relational expressions, in which all variables (except $\Delta$) are given in (two-dimensional) complex numbers, are known with respect to it.

$$C_{j(k+1)}=C_{jk}-\Delta \cdot sgn \sum_{k=1}^{K} D^*_{(k-j)} \cdot Y_k \tag{1}$$

$$C_{jk}=\gamma_{jk}+id_{jk} \tag{2}$$

$$Y_k=Y_{Pk}+iY_{Qk} \tag{3}$$

$$D^*_{(k-j)}=D'_{P(k-j)}-iD_{Q(k-j)} \tag{4}$$

where   j is the tap number,
        k is the time,
        $\Delta$ is the fixed incremental step size of the tap setting,
        $D^*_{(k-j)}$ is the complex conjugate of $D'_{(k-j)}$, and
        sgn is the polarity.

To rearrange the real and imaginary number parts, supposing K=1 which is usually used in actual circuits, the following expression hold:

$$_{j(k+1)}=\gamma_{jk}-\Delta \cdot \text{sgn}(Y_{Pk} \cdot D'_{P(k-j)}+Y_{Qk} \cdot D'_{Q(k-j)}) \qquad (5)$$

$$d_{j(k+1)}=d_{jk}-\Delta \cdot \text{sgn}(Y_{Qk} \cdot D'_{P(k-j)}-Y_{Pk} \cdot D'_{Q(k-j)}) \qquad (6)$$

Where the ZF method is used, all the variables in these equations are binary, and can be readily subjected to logical operation by a digital circuit. Products and sums are achieved by exclusive OR circuits (EORs) 51—53 and 55—59, exclusive NOR circuits (ENORs) 54 and 60, and resistors 61—70, respectively, and the successive correction of taps in Equations (5) and (6) can be readily realized by the use of the integrators with resetting function 80, 81, 82, 91 and 92 (to be further described in detail below). Supposing here, with a view to explaining control signals in Fig. 1, j=1 (tap 1) and, to fix the time, k=0, thereby omitting k, the second term of the right side of Equations (5) and (6) will be transformed into, respectively:

$$\Delta \cdot \{Y_P \cdot D'_{P(-1)}+Y_Q \cdot D'_{Q(-1)}\} \qquad (7)$$

$$\Delta \cdot \{Y_Q \cdot D'_{P(-1)}-Y_P \cdot D'_{Q(-1)}\} \qquad (8)$$

The symbol sgn in Equations (5) and (6) is unnecessary under the condition that binary variables are logically operated. Here can be readily obtained $D'_{P(-1)}$ and $D'_{Q(-1)}$, which respectively mean signals one bit behind $D'_P$ and $D'_Q$, by the use of shift registers 73 and 74, and multiplication can be achieved, as stated above, with the EROs 57—59 and the ENOR 60. In the case of j=1, where $D'_P$ and $D'_Q$ cannot be advanced by one bit, $Y'_P$ and $Y'_Q$ are delayed by one bit so that $D'_P$ and $D'_Q$ are in effect advanced by one bit relative to the times of $Y_P$ and $Y_Q$. It would be obvious that the same applies to shift register 71 and 72 and the EORs 51—53 and the ENOR 54. As so far described, the equalizer correlates error signals ($Y'_P$, $Y'_Q$) and demodulation signals ($D'_P$, $D'_Q$) in a given relationship with respect to time, determines the time position of the occurrence of an inter-symbol interference (waveform distortion) and eliminates this waveform distortion by controlling the variable tap gain circuit of the corresponding tap. Since waveform distortions include in-phase and quadrature distortions, the variable tap gain circuits 20—22 and 31—32 are needed to equalize the two types of distortion, which then have to be combined by the use of the 90° coupler. Whereas there is no circuit in the embodiment illustrated in Fig. 1 corresponding to the circuit 20 in the way the variable tap gain circuits 31 and 32 respectively correspond to the circuits 21 and 22, either such a circuit may be added or, if no such circuit is added, the carrier recovery circuit 44 can be caused to perform the function of a circuit which would correspond to the circuit 20. A clock pulse from a clock synchronizer circuit 43 is supplied to the decision/error signal generator circuit 42 and the shift registers 71—74.

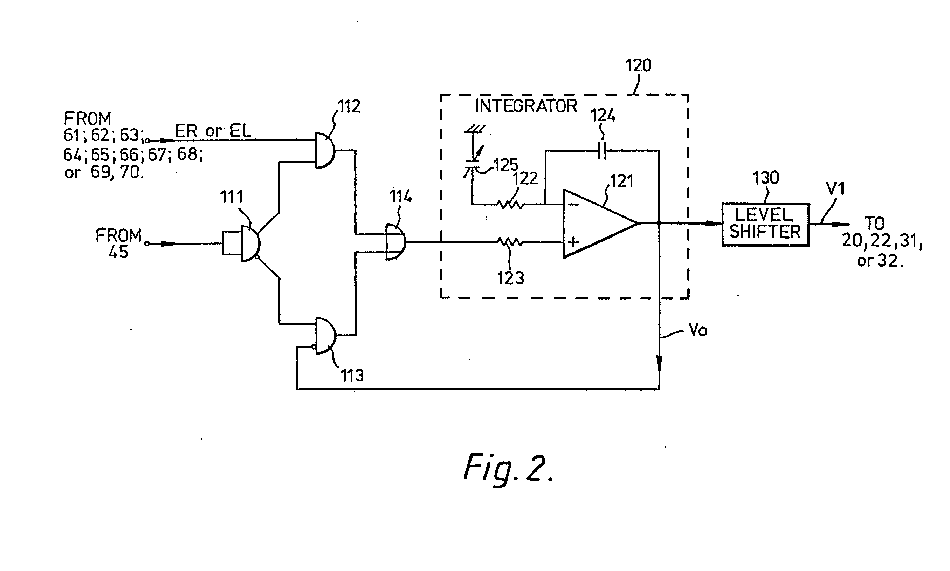

Next will be described the resetting function of the integrator illustrated in Fig. 2. In the absence of distortion on the transmission path, the gain of each tap is:

$$\gamma_0=1, \gamma_{-1}=\gamma_1=d_{-1}=d_1=0$$

When a distortion on the transmission path grows beyond the capability of the equalizer, the equalizer goes out of synchronization, and once it does so, gains $\gamma_{-1}, \gamma_1, d_{-1}$ and $d_1$ become unequal to zero, such that a distortion occurs within the equalizer, which usually cannot return to a state of synchronism. To relieve the equalizer out of this trouble, the resetting function is used to forcibly create a state of $\gamma_0=1$, $\gamma_{-1}=\gamma_1=d_{-1}=d_1=0$ (or to temporarily suspend the equalizing function), and when the distortion on the transmission path becomes small enough to come within the pull-in or capture range of the equalizer, the resetting is released to let the equalizer resume its equalizing action. In other words, the resetting is intended for setting the variable tap gain circuits 21—22 and 31—32 at their respective initial levels and thereby ensuring locked-in operation. Therefore, it is necessary, when the resetting function is to be used, to forcibly set the output of the integrator at a certain voltage and to discharge the capacitor of the integrator.

Referring to Fig. 2, when the resetting signal from an asynchronism detector circuit 45 is "1" or in a state of synchronism, an AND/NAND gate 111 opens an AND gate 112, so that input signal $ER_{-1}$, $EI_{-1}$, $ER_0$, $ER_1$ or $EI_1$ is fed to the input of an integrator 120 by way of the AND gate 112 and an OR gate 114, for normal integrating operation. This integrator circuit 120 consists of a differential amplifier 121, resistors 122 and 123, a capacitor 124 and an offset adjusting power source 125. Next, when the resetting signal is "0" or in a state of asynchronism, the AND/NAND gate 11 opens an AND gate 113, so that the output $V_0$ of the integrator 120 is negatively fed back to the input of the integrator 120 by way of the gates 113 and 114 as shown in Fig. 2 and, while discharging the capacitor 124, fixed to the threshold level of the input to the gate 113. A level shift circuit 130, which is provided for giving as desired the difference ($V_1$—$V_0$) between said gate input threshold and the tap gain voltage of each tap, is not absolutely required.

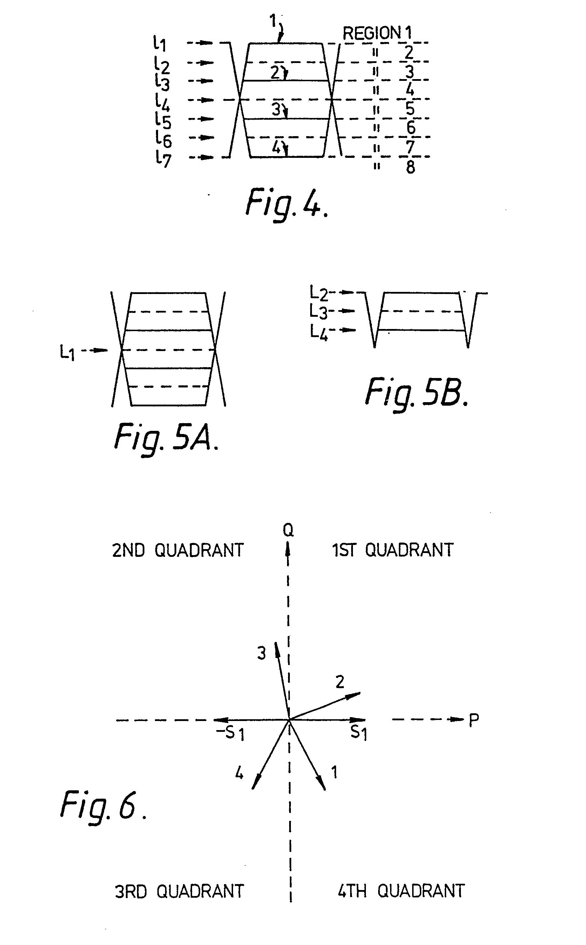

In a conventional equalizer with an IF transversal filter, the ZF algorithm is generally inapplicable for demodulated baseband signals ($D'_P$, $D'_Q$) and error signals ($Y_P$, $Y_Q$, $Y'_P$, $Y'_Q$) derived therefrom, but applicable only to the case in which the carrier frequency ($f_c$) of input modulated signals is equal to a positive integral multiple of the modulation rate ($f_s$) of input modulated signals. Since, in this case, the phase rotations of the carrier by delay times $\tau_1$ and $\tau_2$ in the delay circuits 10 and 11, referred to in Fig. 1, are equal to integral multiples of $2\pi$ and modulated signals ($S_0$, $S_1$, $S_2$) at all the taps are in phase with one another, the system illustrated in Fig. 1 as an embodiment is applicable as it is. However, as the signals $S_0$, $S_1$ and $S_2$ are not necessarily in phase with one another if $f_c$ is unequal to $Nf_s$ (N is a positive integer), the control system will not properly operate then. In other words, so that it can properly operate, the signal $S_1$ being the reference phase, the signals of other taps ($S_0$ and $S_2$) should be in the phase range of $-90°$ to $+90°$ on a vector plane. This relationship is diagrammed in Fig. 6., where if the signal $S_0$ and $S_2$ are in either the first or the fourth quadrant (for instance, vector ② or ①), the control system will properly operate while, if they are in the second or the third quadrant (for instance, vector ③ or ④), the control will diverge. This problem can be readily solved by utilizing the present invention.

The first method is, where the modulation rate ($f_s$) is such that the signals $S_0$ and $S_2$ are in the second and third quadrant, to equivalently bring the phase of $S_0$ and $S_2$ into the first and fourth quadrants by reversing the signal polarity of one of the circuits taking part in the control loop.

The second method is to make the delay times ($\tau_1$, $\tau_2$) of the delay circuits 10 and 11 intentionally unequal to the inverse number of the modulation rate so that the phases of the signals $S_0$ and $S_2$ are selected to eventually come into the first and fourth quadrants. In this case, the closer the phases of the signals $S_0$ and $S_2$ to that of $S_1$, the more stable will be the control loop to any change (offset) in the carrier ($f_c$). If the shifts of the delay times $\tau_1$ and $\tau_2$ are small enough, they will not affect the equalizing capacity of the equalizer.

The third method, which is a combination of the first two methods, is to bring the phases of the signals $S_0$ and $S_2$ as close as possible to the inverse polarity of the signal $S_1$ by shifting the delay times $\tau_1$ and $\tau_2$, and further to reverse the polarity of one of the circuits taking part in the control loop.

By resorting to these methods, there can be realized, merely by processing in the baseband, an equalizer with an IF band transversal filter using the ZF algorithm as it is.

Next will be described an embodiment of the decision/error signal generator circuit 42 shown in Fig. 3.

Generally, illustrated in Fig. 4 which refers to the case of L=16, $7(=\sqrt{L}-1)$ DC-coupled decision circuits (whose threshold values are represented by $I_1$ through $I_7$ and whose outputs, by $x_1$ through $x_7$, respectively) to produce error signals Y. In this case, $Y_P=Y'_P$ and $Y_Q=Y'_Q$ as in Fig. 1, and if $Y=x_1+\bar{x}_2x_3+\bar{x}_4x_5+\bar{x}_6x_7$, error signals Y listed in Table 1 will be obtained.

TABLE 1

| $X_1$ | $X_2$ | $X_3$ | $X_4$ | $X_5$ | $X_6$ | $X_7$ | | Y |
|---|---|---|---|---|---|---|---|---|
| 1 | 1 | 1 | 1 | 1 | 1 | 1 | | 1 |
| 0 | 1 | 1 | 1 | 1 | 1 | 1 | | 0 |
| 0 | 0 | 1 | 1 | 1 | 1 | 1 | | 1 |
| 0 | 0 | 0 | 1 | 1 | 1 | 1 | | 0 |
| 0 | 0 | 0 | 0 | 1 | 1 | 1 | | 1 |
| 0 | 0 | 0 | 0 | 0 | 1 | 1 | | 0 |
| 0 | 0 | 0 | 0 | 0 | 0 | 1 | | 1 |
| 0 | 0 | 0 | 0 | 0 | 0 | 0 | | 0 |

Figs. 5(a) and (b) refer to an instance in which full-wave rectification is used to reduce the required number of decision circuits. The number of decision circuits in this particular case is reduced to four. If, here again, the thresholds of the DC-coupled decision circuits are represented by $L_1$ through $L_4$ and their outputs, by $X_1$ through $X_4$,

$$Y=Y_1\oplus X_2\oplus X_3\oplus X_4,$$

and error signals Y listed in Table 2 will be obtained. In this case, too, $Y_P=Y'_P$ and $Y_Q=Y'_Q$ and the main and other taps need only one error signal each.

O 055 922

In the circuit illustrated in Fig. 3, the inputs of decision circuits 214, 224 and 213, 223 having thresholds of $L_2$ and $L_4$, respectively, are AC-coupled to full-wave rectifiers 210 and 220 by capacitors 215 and 225. In this instance, two kinds of error signals $Y'_P$ and $Y'_Q$ are required for controlling the main tap; and $Y_P$ and $Y_Q$, for controlling each of other taps.

TABLE 2

| $X_1$ | $X_2$ | $X_3$ | $X_4$ | | Y |
|---|---|---|---|---|---|
| 1 | 1 | 1 | 1 | | 1 |
| 1 | 0 | 1 | 1 | | 0 |
| 1 | 0 | 0 | 1 | | 1 |
| 1 | 0 | 0 | 0 | | 0 |
| 0 | 0 | 0 | 0 | | 1 |
| 0 | 0 | 0 | 1 | | 0 |
| 0 | 0 | 1 | 1 | | 1 |
| 0 | 1 | 1 | 1 | | 0 |

The reason is that: while the function of the variable tap gain circuit 20 for the main tap is automatic gain control and serves to keep the multi-level baseband signal level constant, that of other variable tap gain circuits 21, 22, 31 and 32 than the circuit 20 is the elimination of inter-symbol interference, and in the case of AC-coupling there is a difference in the way of error signal generation between level variation and inter-symbol interference, as respectively represented by $\hat{X}'_4$ and $X'_4$ in Table 3.

TABLE 3

| $X_1$ | $X'_2$ | $X'_3$ | $\hat{X}'_4$ | $X'_4$ | | Y | Y' |
|---|---|---|---|---|---|---|---|
| 1 | 1 | 1 | 1 | 1 | | 1 | 0 |
| 1 | 0 | 1 | 1 | 1 | | 0 | 1 |
| 1 | 0 | 0 | 0 | 1 | | 1 | 1 |
| 1 | 0 | 0 | 1 | 0 | | 0 | 0 |
| 0 | 0 | 0 | 1 | 0 | | 1 | 0 |
| 0 | 0 | 0 | 0 | 1 | | 0 | 0 |
| 0 | 0 | 1 | 1 | 1 | | 1 | 1 |
| 0 | 1 | 1 | 1 | 1 | | 0 | 1 |

For this reason, error signals are differently expressed:

Error signal for the main tap: $\qquad Y'=X'_1\oplus X'_2\oplus \hat{X}'_4$

Error signal for other taps: $\qquad Y=X'_1\oplus X'_2\oplus X'_3\oplus X'_4$

Although $\hat{X}'_4$ and $X'_4$ are expressed differently in Table 3 to indicate the functional difference, they obviously are the output $X'_4$ of the same decision circuit, and the different expressions simply mean that, in the region of 3 to 6 shown in Fig. 4, the function of the output $X'_4$ in level variation is different from that in inter-symbol interference. The partial use of AC-coupled discriminators reflects their

6

advantage that, compared with DC-coupled ones, they contribute to simplifying the circuitry and therefore to reducing the number of components required, the scale of circuitry and power consumption.

In Fig. 3, the decision circuit consists of decision circuits 211, 212, 221 and 222, the full-wave rectifiers 210 and 220 and EORs 232 and 241, whereby demodulated signals P, P', Q and Q' are provided. For further details on this decision circuit, reference is made to Fig. 5 of the U.S. Patent No. 4,095,187. Reference numbers 231 and 242 represent exclusive OR circuits, and 233, 234, 243 and 244, exclusive NOR circuits.

While there are many conceivable methods to generate error signals, some of which were described above as examples, any of them is compatible with the present invention.

## Claims

1. An adaptive equalizer comprising transversal filter means (10, 11, 20—22, 31—34) for equalizing a modulated carrier wave in response to a first control signal, said transversal filter means including a delay circuit, a first tap and a second tap; first means including integrator means (80—82, 91, 92), for generating said first control signal from the output of said transversal filter means; second means (45) for detecting asynchronization in the control loop of the adaptive equalizer and providing a second control signal; and third means for setting said first control signal at a fixed level in response to said second control signal, characterised in that said integrator means forms a self-feedback loop (120—113—114—120) in response to said second control signal and provides said fixed level.

2. An adaptive equalizer as claimed in claim 1, wherein said transversal filter operates in an intermediate frequency band and is controlled by means of a zero-forcing equalizing algorithm so that the phase difference in said modulated carrier wave between said first tap and said second tap is in the range of —90° to +90°.

3. An adaptive equalizer as claimed in claim 1 or claim 2, wherein the delay time of said circuit is neither the inverse of the modulation rate of said modulated carrier wave nor the inverse of twice the modulation rate of said modulated carrier wave.

4. An adaptive equalizer as claimed in any one of the preceding claims, wherein said first means comprises a decision circuit/error signal generator (42) including a DC coupled decision circuit (211, 212, 221, 222) and an AC coupled decision circuit (213 to 215, 223 to 225).

5. An adaptive equalizer as claimed in claim 1, wherein said modulated carrier wave comprises a quadrature amplitude modulated carrier wave.

6. An adaptive equalizer as claimed in claim 1, wherein said self-feedback loop comprises a plurality of logic circuits (113, 114).

## Patentansprüche

1. Adaptiver Entzerrer mit einer Transversalfilter-Anordnung (10, 11, 20—22, 31—34) zum Entzerren einer modulierten Trägerwelle in Abhängigkeit von einem ersten Regelsignal, wobei die Transversalfilter-Anordnung eine Verzögerungsschaltung, eine erste Abzweigung und eine zweite Abzweigung aufweist; einer ersten Anordnung mit einer Integratoranordnung (80—82, 91, 92), zum Erzeugen des ersten Regelsignals aus dem Ausgangssignal der Transversalfilter-Anordnung; einer zweiten Anordnung (45) zum Erkennen einer Asynchronisation in der Regelschleife des adaptiven Entzerrers und Erzeugen eines zweiten Regelsignals; und einer dritten Anordnung zum Einstellen des ersten Regelsignals auf einen festen Pegel in Abhängigkeit von dem zweiten Regelsignal, dadurch gekennzeichnet, daß die Integratoranordnung in Abhängigkeit von dem zweiten Regelsignal eine Selbs-Rückkopplungsschleife (120—113—114—120) bildet und den festen Pegel erzeugt.

2. Adaptiver Entzerrer nach Anspruch 1, dadurch gekennzeichnet, daß das Transversalfilter in einem Zwischenfrequenzband arbeitet und mittels eines Nullwert-Entzerrungsalgorithmus geregelt wird, so daß die Phasendifferenz in der modulierten Trägerwelle zwischen der ersten Abzweigung und der zweiten Abzweigung im Bereich von —90° bis +90° liegt.

3. Adaptiver Entzerrer nach Anspruch 1 oder 2, dadurch gekennzeichnet, daß die Verzögerungszeit der Schaltung weder das Inverse der Modulationsgeschwindigkeit der modulierten Trägerwelle noch das Inverse des Zweifachen der Modulationsgeschwindigkeit der modulierten Trägerwelle beträgt.

4. Adaptiver Entzerrer nach einem der vorangehenden Ansprüche, dadurch gekennzeichnet, daß die erste Anordnung eine Vergleicherschaltung/Fehlersignalgenerator (42) aufweist mit einer Gleichstrom-gekoppelten Vergleicherschaltung (211, 212, 221, 222) und einer Wechselstrom-gekoppelten Vergleicherschaltung (213 bis 215, 223 bis 225).

5. Adaptiver Entzerrer nach Anspruch 1, dadurch gekennzeichnet, daß die modulierte Trägerwelle eine Quadraturamplitudenmodulierte Trägerwelle aufweist.

6. Adaptiver Entzerrer nach Anspruch 1, dadurch gekennzeichnet, daß die Selbs-Rückkopplungsschleife mehrere logische Schaltungen (113, 114) aufweist.

7

## 0 055 922

**Revendications**

1. Filtre correcteur adaptatif, comprenant un moyen de filtre transversal (10, 11, 20—22, 31—34) pour corriger une onde porteuse modulée en réponse à un premier signal de commande, ce moyen de filtre transversal comportant un circuit à retard, une première prise et une seconde prise; un premier moyen comportant un moyen d'intégrateur (80—82, 91, 92) pour produire le premier signal de commande à la sortie du moyen de filtre transversal; un second moyen (45) pour détecter une asynchronisation dans la boucle de commande du filtre correcteur adaptatif et fournir un second signal de commande; et un troisième moyen pour régler le premier signal de commande à un niveau fixe en réponse au second signal de commande, caractérisé en ce que le moyen d'intégrateur forme une boucle à auto-réaction (120—113—114—120) en réponse au second signal de commande et fournit le niveau fixe.

2. Filtre çorrecteur adaptatif selon la revendication 1, où le filtre transversal fonctionne dans une bande de fréquence intermédiaire et est commandé au moyen d'un algorithme de correction forçant le zéro de façon que la différence de phase dans l'onde porteuse modulée entre la première prise et la seconde prise soit comprise entre —90° et +90°.

3. Filtre correcteur adaptatif selon la revendication 1 ou la revendication 2, où le retard du circuit n'est ni l'inverse du taux de modulation de l'onde porteuse modulée, ni l'inverse du double du taux de modulation de l'onde porteuse modulée.

4. Filtre correcteur adaptatif selon l'une quelconque des revendications précédentes, où le premier moyen comprend un circuit de décision/générateur de signal d'erreur (42) comportant un circuit de décision couplé en courant continu (211, 212, 221, 222) et un circuit de décision couplé en courant alternatif (213 à 215, 223 à 225).

5. Filtre correcteur adaptatif selon la revendication 1, où l'onde porteuse modulée comprend une onde porteuse modulée en amplitude en quadrature.

6. Filtre correcteur adaptatif selon la revendication 1, où la boucle d'auto-réaction comprend une pluralité de circuits logiques (113, 114).

8

Fig.1.

*Fig. 2.*

FROM
61; 62; 63;
64; 65; 66; 67; 68;
or 69, 70.

ER or EL

112

111

FROM
45

114

120

INTEGRATOR

124

125
122

121

123

Vo

130

LEVEL
SHIFTER

V1

TO
20, 22, 31,
or 32.

113

0 055 922

2

Fig. 3.

Fig. 4.

Fig. 5A.

Fig. 5B.

Fig. 6.